# EUROPEAN PATENT SPECIFICATION

(11) **EP 2 641 461 B1**
(45) Date of publication and mention of the grant of the patent: **19.12.2018**
(21) Application number: 12160082.9
(22) Date of filing: 19.03.2012
(51) Int. Cl.: A01D 34/416

(54) **Line trimmer**
Fadentrimmer
Tondeuse à fil

(43) Date of publication of application: 25.09.2013
(73) Proprietor: Robert Bosch GmbH, 70442 Stuttgart (DE)
(72) Inventor: Lister, John, Bury St. Edmunds, Suffolk IP32 7PT (GB); Davidson, Robert, Cambride, Cambridgeshire CB1 3AD (GB); Glanville, Mark, Ipswich, Suffolk IP4 4RL (GB)

(56) References cited:
- DE-A1-102008 039 192
- GB-A- 2 417 664
- US-A- 4 162 575
- US-B1- 6 385 853

## Description

### Field of the Invention

This invention is concerned with a line trimmer or mower head. In particular it is concerned with a line trimmer or mower head having an automatic and/or manual line feed system with reduced tendency for cut and worn line to retract fully back into the spool housing. For the sake of convenience the term 'line trimmer' herein is intended to include within its scope a 'mower head' arrangement.

### Prior Art

Line trimmers or mower heads are known for cutting grass and similar vegetation, which comprise at least one length of cutting cord (or 'line' herein) wound around a rotatable spool, which pays out one or more externally projecting lengths of line. Rapid rotation of the spool and line projecting therefrom, typically by electric or petrol motor applies a centrifugal load on the projecting line which becomes the cutting line to cut the grass or vegetation.

Trimmer line feed mechanisms are well known which permit the length of exposed cutting line to be increased when this part of the line breaks or wears below acceptable levels. Such paying out of line from its winding can be effected without replacing the line. In some versions of trimmer it may be effected automatically during use and/or manually by the operator as in 'bump' feeding.

For example the skilled reader is referred to the construction of line trimmers disclosed eg in WO-2007/032,043 and WO-2010/082,347.

Additionally, line trimmer spools are known with radiused or splayed exit guides for the external cutting line as in US 7 111 403 and EP 1 585 380 whereas external cutting line exits are also known with other protective means in, for example, EP 1 942 717, EP 2 107 866, and US 4 114 269.

In line trimmers of these latter types, the external line can still break or wear too close to the outer surface of the feed mechanism, whereupon the end of the line (or lines where more than one is present) can retract back inside the spool mechanism, which can prevent the spool line feed mechanism from being able properly to feed or pay out fresh line.

Similarly, there can be problems with automatic feed systems in which a minimum length of line needs to project beyond its housing, for that system to feed out new line. Should the line break at or wear down to a length shorter than this critical length, the automatic feed system is unable to feed out more line. Document DE 10 2008 039 192 A1 discloses a line trimmer head with the features from the preamble of claim 1.

### Objects and Summary of the Invention

The present invention seeks to reduce the likelihood of occurrence of a major frustration currently suffered with manual "bump" and/or automatic line feed heads, namely line breakage or wear too close to the internal spool winding which renders the system unable to feed out. Typically in such situations the broken line retracts back into the spool chamber toward the spool winding, which creates even more problems for the user.

The invention accordingly seeks to provide a line trimmer or mower head with a manual and/or automatic line feed system but wherein the cutting line is less likely to break too close to the spool winding and housing.

The invention further seeks to provide a line trimmer or mower head with a line feed mechanism, be it manual "bump" and/or fully automatic, which allows the spool of wound line within the head to unwind a little, thereby releasing line to replace that worn or broken, and wherein the remaining unworn/unbroken length of line is still able to generate enough tension in use to unwind the spool.

Essentially, according to this invention there is provided a line trimmer head according to claim 1.

Further preferred and optional features of the invention may be found amongst the subclaims herein.

### Brief Description of the Drawings

In order that the invention may be illustrated, more easily appreciated and readily carried into effect by those skilled in this art, embodiments of line trimmers according to the invention will now be described purely by way of non-limiting example with reference to the accompanying drawings and in which:
Figure 1 is an exploded diagrammatical view of a line trimmer head according to a first preferred embodiment,
Figure 2 is an enlarged schematic view of part of the assembly shown in Figure 1, particular depicting one of the guide passages, and
Figure 3 is a schematic plan view (in partial cutaway), of the Figure 1 and 2 assembly, showing the internal arrangement of spool relative to one guide passage.

### Detailed Description of Preferred Embodiments of the Invention

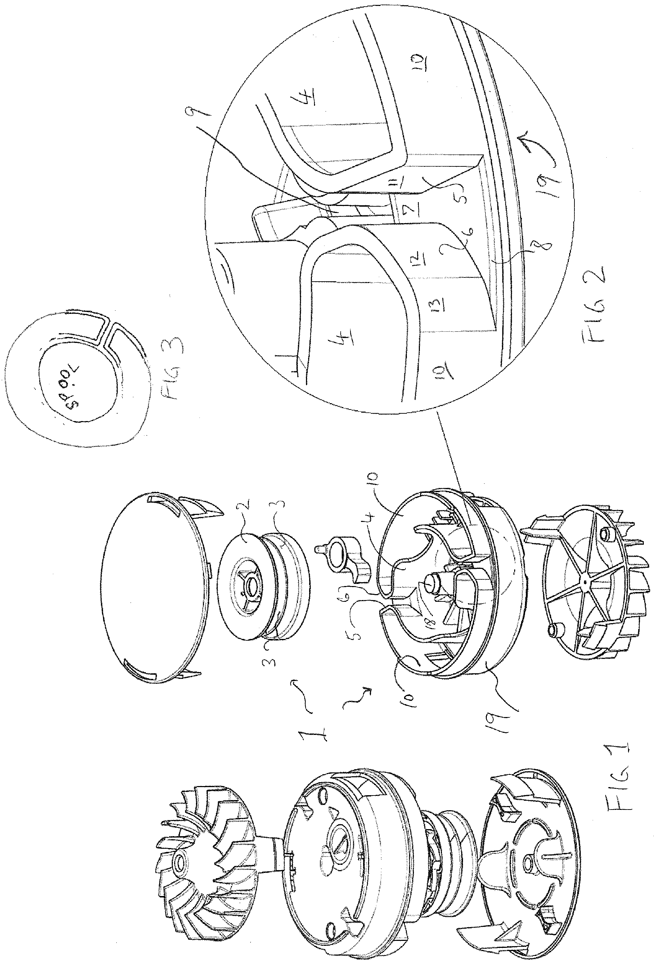

Referring to the drawings and firstly to Figures 1-3 thereof, a line trimmer head 1 in exploded view is shown comprising a rotatable spool 2 with two regions 3 to accommodate wound line (not shown). The spool 2 is to be mounted upon an axial spigot 18 located generally centrally within a spool housing 19. A primary wall member 4 is located in close proximity to the periphery of the spool when rotatably mounted. It is an upstanding part-circular component and two similar such primary wall members are provided, one opposite the other, generally to surround the outer periphery of the spool.

Additionally, the spool housing comprises a pair of secondary wall members 10 each spaced apart from a primary wall member but connected thereto by first and second formations of the primary wall member which define a guide passage 7 within which line from the spool is located and can be fed out. The secondary wall members are similarly upstanding and part circular. As shown more clearly in Figure 2, one guide passage formation 11 is generally straight and radially disposed with respect to the spool axis. In use, this guide passage formation is arranged to be 'leading' hence moving ahead of and protecting the line in the normal direction of spool rotation. This first formation 11 creates a linking member between spaced apart primary and secondary wall members. Opposite the first formation 11 is a second formation 12, 13 of a different profile and also serving partly to define the guide passage 7 which extends from an inlet 9 to an outlet 8. The said second formation 12, 13 is partly radially extending and partly curved away (at 13) from its radially extending portion serving to widen the opening 8 relative to the width of the inlet 9. In use, this guide passage formation is arranged to be 'trailing' with its profile therefore allowing some momentary flexing of the line in use against solid objects while still maintaining substantially radial guidance.

Conveniently the primary and secondary wall members 4, 10 including the first and second formations of the primary wall members (11 and 12, 13 respectively) can be of one-piece and preferably integral construction. In the illustrated arrangement there are two guide passages 7 so here a spool is used with two wound lines. The lines are to pass through the said guide passages 7.

The primary wall members 4 serve to provide primary protection to the rotatable spool and the wound line contained thereon, and assist in defining the inlet 9 to the guide passage. The secondary wall members 10 serve to provide secondary protection to the internal working length of line and assist in defining the outer opening 8 of the guide passage. Accordingly it can be seen that primary wall members 4 are of sufficient height to enclose the full depth of the spool while secondary wall members 10 which enclose the line guide passage(s) may be of lesser height. Such lesser height could be such as to provide only a guide passage outlet depth of two line diameters.

Whilst the preferred embodiment of Figures 1 and 2 show a particularly preferred form of profiled guide passage, profiling being dictated by shape and contour of the said first and second formations (11 and 12, 13 respectively) which extend between primary and secondary wall members, other forms of guide channel are possible. For example as shown in Figure 3 herein, the guide passage is almost entirely radial in the sense that the connecting formations between primary and secondary wall members are generally linear and spaced but also substantially parallel. Other configurations of guide channel will be apparent to those skilled in the art and are intended to be included within the scope of the claims.

Referring back to Figures 1 to 3 more particularly, the line trimmer feed system has two generally concentric walls that assist in feeding of the line, the outer wall acting as a guard that prevents the line being damaged or broken at any diameter less than that of the outer wall. This ensures a minimum length of line always remains within the guide passage. Sufficient length of line remains after breakage or wear of working line beyond the guide passage to operate any automatic feed system.

In all embodiments while passing through the guide passage, the line is guided/restrained to be substantially radial.

The length of the guide passage providing working line guidance is set such that if the line does break off at the external opening of the guide passage, the line tension generated under centrifugal loading from the remaining line length remains adequate to rotate the spool and feed out more line. The spacing between inner and outer walls and hence length of the guide passage to achieve this is preferably 15-25mm, more preferably 16-24mm, most preferably 18-22mm such as about 20mm. The guidance/restraint provided by the guide passage prevents the remaining line momentarily from moving to too small a working radius with consequent loss of tension.

Even under abusive conditions, guidance provided by the guide passage prevents the user from breaking the line with too small a working radius and reliable line feed is therefore assured.

Embodiments of the present invention can resolve one of the major frustrations with either bump or automatic line feed heads, all of which currently can suffer from line breakage at their eyelet and then being unable to feed line out from the spool winding. Usually, in such circumstances what is left of the working line disappears back inside the spool chamber, which has tended to create even more problems for the user.

## Claims

1. A line trimmer head (1) including a rotatable spool assembly (2) of at least one feedable line, at least one primary wall member (4) adjacent a periphery of said spool assembly (2), a guide passage (7) extending generally radially away from said primary wall member (4), said guide passage (7) being partly defined by a substantially radially extending first guide passage formation (11), said first guide passage formation (11) is generally straight and radially disposed with respect to the axis of rotation of said spool assembly (2) and arranged to bear upon said line extending through said guide passage (7), such that in use such line located within said guide passage (7) is restricted to a substantially radial orientation, **characterized in that** said guide passage (7) is further partly defined by a second formation (12, 13) generally opposite the first guide passage formation (11) and extending generally radially away from another primary wall member (4), wherein said second formation (12, 13) has a different profile than the first guide passage formation (11) and has at least one generally radially extending portion (12) that partly defines the guide passage (7), and a curved portion (13) extending away from said generally radially extending portion (12).

2. A line trimmer head (1) as claimed in claim 1, wherein at least one secondary wall member (10) is provided and being spaced away from said primary wall member (4).

3. A line trimmer head (1) as claimed in claim 1 or claim 2, wherein the spacing between primary and secondary wall members (4, 10) and hence length of the guide passage (7) is about 15 to 25 mm, more preferably 16-24mm, most preferably 18-22mm such as about 20 mm.

4. A line trimmer head (1) as claimed in any preceding claim, wherein the guide passage (7) has an inlet (9) adjacent the spool assembly (2) and an outlet (8) spaced away from the spool assembly (2) and the vertical channel depth of the guide passage outlet (8) is of the order of two line diameters.

5. A line trimmer head (1) as claimed in any preceding claim, in which the at least one primary wall members (4) extend around the majority of the periphery of the spool assembly (2).

6. A line trimmer head (1) as claimed in any one of claims 4 to 5, in which circumferentially the guide passage inlet (9) is narrower than the outlet (8) of the guide passage (7).

7. A line trimmer head (1) as claimed in claim 1, in which the primary wall member (4) and the secondary wall member (10) are connected by the first guide passage formation (11).

8. A line trimmer head (1) as claimed in any one of claims 1, 6 to 7, in which the primary wall member (4) and the secondary wall member (10) are connected by the said second formation (12, 13).

9. A line trimmer head (1) as claimed in claim 1, in which the primary wall member (4) and said first formation (11) are integrally formed.

10. A line trimmer head (1) as claimed in any one of claims 1, 6 to 9, in which primary and secondary wall members (4, 10) are arranged as projecting part cylindrical components generally concentrically located about the axis of rotation of said spool assembly (2).

11. A line trimmer head (1) as claimed in any one of claims 7 to 10, in which the primary wall member (4), the secondary wall member (10) and said first and second formations (11, 12, 13) are integrally formed.

12. A line trimmer head (1) as claimed in any preceding claim, wherein said first formation (11) comprises an extended portion of said primary wall member (4).

13. A line trimmer head (1) as claimed in any one of claims 1 and 6 to 12, wherein said second formation (12, 13) comprises an extended portion of said primary wall member (4).

## Patentansprüche

1. Fadentrimmerkopf (1), der eine drehbare Spulenanordnung (2) von mindestens einem zuführbaren Faden umfasst, wobei mindestens ein primäres Wandelement (4) an eine Peripherie der Spulenanordnung (2) angrenzt, sich eine Führungspassage (7) im Wesentlichen radial von dem primären Wandelement (4) weg erstreckt, wobei die Führungspassage (7) teilweise durch eine sich im Wesentlichen radial erstreckende erste Führungspassagenformation (11) definiert ist, wobei die erste Führungspassagenformation (11) im Allgemeinen gerade und in Bezug auf die Drehachse der Spulenanordnung (2) radial verläuft sowie so angeordnet ist, dass sie den Faden, der sich durch die Führungspassage (7) erstreckt, trägt, sodass im Gebrauch ein solcher innerhalb der Führungspassage (7) befindlicher Faden auf eine im Wesentlichen radiale Ausrichtung beschränkt ist, **dadurch gekennzeichnet, dass** die Führungspassage (7) ferner teilweise durch eine zweite Formation (12, 13) definiert ist, die der ersten Führungspassagenformation (11) im Allgemeinen gegenüberliegt und sich von dem anderen primären Wandelement (4) im Allgemeinen radial weg erstreckt, wobei die zweite Formation (12, 13) ein anderes Profil als die erste Führungspassagenformation (11) aufweist und einen sich im Allgemeinen radial erstreckenden Abschnitt (12) aufweist, der teilweise die Führungspassage (7) definiert, und sich ein gewölbter Abschnitt (13) von dem sich im Allgemeinen radial erstreckenden Abschnitt (12) weg erstreckt.

2. Fadentrimmerkopf (1) nach Anspruch 1, wobei mindestens ein sekundäres Wandelement (10) bereitgestellt und zu dem ersten primären Wandelement (4) beabstandet ist.

3. Fadentrimmerkopf (1) nach Anspruch 1 oder Anspruch 2, wobei der Abstand zwischen dem primären und dem sekundären Wandelement (4, 10) und folglich die Länge der Führungspassage (7) etwa 15-25 mm, stärker bevorzugt 16-24 mm, am stärksten bevorzugt 18-22 mm, wie etwa 20 mm, beträgt.

4. Fadentrimmerkopf (1) nach einem der vorangehenden Ansprüche, wobei die Führungspassage (7) einen Einlass (9) aufweist, der an die Spulenanordnung (2) angrenzt, und einen Auslass (8), der von der Spulenanordnung (2) weg beabstandet ist, und die vertikale Kanaltiefe des Führungspassagenauslasses (8) in der Größenordnung von zwei Fadendurchmessern liegt.

5. Fadentrimmerkopf (1) nach einem der vorangehenden Ansprüche, wobei sich das mindestens eine primäre Wandelement (4) rings um den größten Teil der Peripherie der Spulenanordnung (2) erstreckt.

6. Fadentrimmerkopf (1) nach einem der Ansprüche 4 bis 5, wobei der Führungspassageneinlass (9) zirkumferenziell schmaler als der Auslass (8) der Führungspassage (7) ist.

7. Fadentrimmerkopf (1) nach Anspruch 1, wobei das primäre Wandelement (4) und das sekundäre Wandelement (10) durch die erste Führungspassagenformation (11) verbunden sind.

8. Fadentrimmerkopf (1) nach einem der Ansprüche 1, 6 bis 7, wobei das primäre Wandelement (4) und das sekundäre Wandelement (10) durch die zweite Formation (12, 13) verbunden sind.

9. Fadentrimmerkopf (1) nach Anspruch 1, wobei das primäre Wandelement (4) und die erste Formation (11) einstückig ausgebildet sind.

10. Fadentrimmerkopf (1) nach einem der Ansprüche 1, 6 bis 9, wobei das primäre und sekundäre Wandelement (4, 10) als vorstehende zylindrische Komponenten angeordnet sind, die sich allgemein konzentrisch über der Drehachse der Spulenanordnung (2) befinden.

11. Fadentrimmerkopf (1) nach einem der Ansprüche 7 bis 10, wobei das primäre Wandelement (4), das sekundäre Wandelement (10) und die erste und zweite Formation (11, 12, 13) einstückig ausgebildet sind.

12. Fadentrimmerkopf (1) nach einem der vorangehenden Ansprüche, wobei die erste Formation (11) einen verlängerten Abschnitt des primären Wandelements (4) umfasst.

13. Fadentrimmerkopf (1) nach einem der Ansprüche 1 und 6 bis 12, wobei die zweite Formation (12, 13) einen verlängerten Abschnitt des primären Wandelements (4) umfasst.

## Revendications

1. Tête de tondeuse à fil (1) comprenant un ensemble bobine (2) rotatif d'au moins un fil pouvant être alimenté, au moins un élément de paroi primaire (4) adjacent à une périphérie dudit ensemble bobine (2), un passage de guidage (7) s'étendant généralement radialement à l'opposé dudit élément de paroi primaire (4), ledit passage de guidage (7) étant partiellement défini par une première formation (11) de passage de guidage s'étendant de façon sensiblement radiale, ladite première formation (11) de passage de guidage étant généralement droite et disposée radialement par rapport à l'axe de rotation dudit ensemble bobine (2) et conçue pour reposer sur ledit fil s'étendant à travers ledit passage de guidage (7), de sorte que lors de l'utilisation ledit fil situé dans ledit passage de guidage (7) soit limité à une orientation sensiblement radiale,
**caractérisée en ce que** ledit passage de guidage (7) est en outre partiellement défini par une seconde formation (12, 13) généralement opposée à la première formation (11) de passage de guidage et s'étendant généralement radialement à l'opposé d'un autre élément de paroi primaire (4), ladite seconde formation (12, 13) ayant un profil différent de celui de la première formation (11) de passage de guidage et ayant au moins une partie s'étendant généralement radialement (12) qui définit partiellement le passage de guidage (7), et une partie courbe (13) s'étendant à l'opposé de ladite partie s'étendant généralement radialement (12).

2. Tête de tondeuse à fil (1) selon la revendication 1, au moins un élément de paroi secondaire (10) étant fourni et étant espacé dudit élément de paroi primaire (4).

3. Tête de tondeuse à fil (1) selon la revendication 1 ou 2, l'espacement entre les éléments de paroi primaire et secondaire (4, 10) et ainsi la longueur du passage de guidage (7) étant d'environ 15 à 25 mm, de préférence encore de 16 à 24 mm, mieux encore de 18 à 22 mm, par exemple environ 20 mm.

4. Tête de tondeuse à fil (1) selon l'une quelconque des revendications précédentes, le passage de guidage (7) ayant une entrée (9) adjacente à l'ensemble bobine (2) et une sortie (8) espacée de l'ensemble bobine (2) et la profondeur de canal vertical du passage de guidage (8) étant de l'ordre de deux diamètres de fil.

5. Tête de tondeuse à fil (1) selon l'une quelconque des revendications précédentes, l'au moins un élément de paroi primaire (4) s'étendant autour de la majorité de la périphérie de l'ensemble bobine (2).

6. Tête de tondeuse à fil (1) selon l'une quelconque des revendications 4 à 5, circonférentiellement, l'entrée (9) du passage de guidage étant plus étroite que la sortie (8) du passage de guidage (7).

7. Tête de tondeuse à fil (1) selon la revendication 1, l'élément de paroi primaire (4) et l'élément de paroi secondaire (10) étant reliés par la première formation (11) de passage de guidage.

8. Tête de tondeuse à fil (1) selon l'une quelconque des revendications 1, 6 à 7, l'élément de paroi primaire (4) et l'élément de paroi secondaire (10) étant reliés par ladite seconde formation (12, 13).

9. Tête de tondeuse à fil (1) selon la revendication 1, l'élément de paroi primaire (4) et ladite première formation (11) étant formés d'une seule pièce.

10. Tête de tondeuse à fil (1) selon l'une quelconque des revendications 1, 6 à 9, les éléments de paroi primaire et secondaire (4, 10) étant disposés comme des composants cylindriques partiels en saillie généralement situés de manière concentrique autour de l'axe de rotation dudit ensemble bobine (2).

11. Tête de tondeuse à fil (1) selon l'une quelconque des revendications 7 à 10, l'élément de paroi primaire (4), l'élément de paroi secondaire (10) et lesdites première et seconde formations (11, 12, 13) étant formés d'une seule pièce.

12. Tête de tondeuse à fil (1) selon l'une quelconque des revendications précédentes, ladite première formation (11) comprenant une partie étendue dudit élément de paroi primaire (4).

13. Tête de tondeuse à fil (1) selon l'une quelconque des revendications 1 et 6 à 12, ladite seconde formation (12, 13) comprenant une partie étendue dudit élément de paroi primaire (4).
